# EUROPEAN PATENT APPLICATION

(11) **EP 4 838 501 A1**
(43) Date of publication of application: **11.11.2026**
(21) Application number: 26172454.6
(22) Date of filing: 15.04.2026
(51) Int. Cl.: G08G 1/0962, B60K 35/22, B60K 35/29, B60R 1/00, B60R 1/28, B60W 50/14, G06V 20/56

(54) **DISPLAY CONTROL DEVICE, DISPLAY CONTROL METHOD, AND RECORDING MEDIUM STORED WITH DISPLAY CONTROL PROGRAM**

(30) Priority: 23.04.2025 JP 2025071779
(71) Applicant: Toyota Jidosha Kabushiki Kaisha, Toyota-shi, Aichi-ken 471-8571 (JP); DENSO CORPORATION, Kariya-shi, Aichi 448-8661 (JP)
(72) Inventor: FANG, Zhicheng, TOYOTA-SHI, AICHI-KEN, 471-8571 (JP); TAKADA, Arata, TOYOTA-SHI, AICHI-KEN, 471-8571 (JP); KONISHI, Shogo, TOYOTA-SHI, AICHI-KEN, 471-8571 (JP); NISHIDA, Takashi, TOYOTA-SHI, AICHI-KEN, 471-8571 (JP); HATTORI, Tsutomu, TOYOTA-SHI, AICHI-KEN, 471-8571 (JP); NISHIMURA, Shusei, KARIYA-SHI, AICHI-PREF, 448-8661 (JP)
(74) Representative: Cabinet Beau de Loménie

(57) **Abstract**

A display control device including a control unit that displays, at a display unit, a vehicle image illustrating at least one vehicle and a road surface image illustrating at least one travel lane in which the vehicle is traveling, and that moves an inbound vehicle image illustrating an inbound vehicle that has entered a first range set in the travel lane to a pre-set position in the road surface image illustrating the travel lane entered by the inbound vehicle.

## Description

### BACKGROUND

The present disclosure relates to a display control device, a display control method, and a recording medium storing a display control program.

### Related Art

Japanese Patent No. 7048398 discloses a vehicle control device capable of performing autonomous driving that imparts a sense of security to an occupant.

### SUMMARY

In the technology according to Japanese Patent No. 7048398, an image illustrating a host vehicle and surrounding conditions thereof is displayed on a display unit (see, for example, Fig. 8 of Japanese Patent No. 7048398).

Although configuration to display information about the surroundings of a host vehicle on a display unit is itself hitherto known technology, the information displayed does not always have high visibility to a driver, and there is still room for improvement from the perspective of raising visibility of display content.

An object of the present disclosure is to provide a display control device, a display control method, and a recording medium storing a display control program, that are capable of, when presenting surrounding conditions by an image illustrating a vehicle and a travel lane, suppressing wobble of display position of an image illustrating a vehicle arising from the effect of detection conditions of the vehicle.

A display control device according to a first aspect includes a control unit that displays, at a display unit, a vehicle image illustrating at least one vehicle and a road surface image illustrating at least one travel lane in which the vehicle is traveling, and that moves an inbound vehicle image illustrating an inbound vehicle that has entered a first range set in the travel lane to a pre-set position in the road surface image illustrating the travel lane entered by the inbound vehicle.

In the display control device according to the first aspect, the control unit displays the vehicle image and the road surface image on the display unit. The control unit moves the inbound vehicle image illustrating the inbound vehicle that has entered the first range set in the travel lane traveled by the vehicle to the pre-set position in the road surface image illustrating the travel lane entered by the inbound vehicle. By moving the inbound vehicle image to the pre-set position on the road surface image illustrating the travel lane that the inbound vehicle has entered in this manner, the display control device is able, when presenting surrounding conditions with an image illustrating a vehicle and a travel lane, to suppress wobble of display position of an inbound vehicle image arising from the effect of detection conditions of the vehicle.

A display control device according to a second aspect is the first aspect, wherein, while the inbound vehicle is traveling in the travel lane in which the inbound vehicle was traveling prior to entry, the control unit displays the inbound vehicle image by fixed display at the pre-set position in the road surface image illustrating the travel lane until the inbound vehicle has exceeded a second range that is wider than the first range and is set in the travel lane.

In the display control device according to the second aspect, while the inbound vehicle is traveling in the travel lane in which the inbound vehicle was traveling prior to entry, the control unit displays the inbound vehicle image by fixed display at the pre-set position in the road surface image illustrating the travel lane until the inbound vehicle has exceeded the second range that is wider than the first range and is set in the travel lane. The display control device is thereby able to suppress unnecessary swaying in the display of the inbound vehicle image and instantaneous changes in the position thereof.

A display control device according to a third aspect is the second aspect, wherein, after the inbound vehicle has exceeded the second range, the control unit continuously moves the inbound vehicle image in accordance with movement of the inbound vehicle until the inbound vehicle enters the first range set in the travel lane travelled after entry.

In the display control device according to the third aspect, after the inbound vehicle has exceeded the second range, the control unit continuously moves the inbound vehicle image in accordance with movement of the inbound vehicle until the inbound vehicle enters the first range set in the travel lane travelled after entry. The display control device accordingly enables a driver to naturally and intuitively recognize movements of the inbound vehicle visually.

A display control device according to a fourth aspect is the second aspect or the third aspect, further including a setting unit that dynamically changes a width of at least one of the first range or the second range based on an identified type of the inbound vehicle.

In the display control device according to the fourth aspect, the setting unit dynamically changes the width of at least one of the first range or the second range based on the identified type of the inbound vehicle. The display control device accordingly enables display control appropriate to the characteristics of each inbound vehicle, enabling the visibility of the inbound vehicle image to be improved.

A display control device according to a fifth aspect is any one of the first aspect to the fourth aspect, wherein the pre-set position on the road surface image is a width direction central position of the road surface image.

In the display control device according to the fifth aspect, the pre-set position on the road surface image is a width direction central position of the road surface image. With the display control device, the position of the inbound vehicle image is accordingly displayed in a unified manner, enabling visibility to be improved and display variability to be suppressed.

A display control device according to a sixth aspect is any one of the first aspect to the fifth aspect, wherein the vehicle includes a host vehicle and an other-vehicle and, in a case in which the other-vehicle is changing a vehicle lane to be in front, in a progression direction, of the host vehicle and has entered the first range set in the travel lane in which the host vehicle is traveling, the control unit moves an other-vehicle image illustrating the other-vehicle to be in front, in the progression direction, of a host vehicle image illustrating the host vehicle and to the pre-set position on the road surface image illustrating the travel lane.

In the display control device according to the sixth aspect, in a case in which the other-vehicle is changing a vehicle lane to be in front, in a progression direction, of the host vehicle and has entered the first range set in the travel lane in which the host vehicle is traveling, the control unit moves the other-vehicle image to be in front, in the progression direction, of the host vehicle image and to the pre-set position on the road surface image illustrating the travel lane. The display control device accordingly enables a driver to intuitively recognize the presence of an other-vehicle that has barged into its course, and the positional relationship thereto.

The display control device according to a seventh aspect is any one of the first aspect to the sixth aspect, wherein the vehicle is a host vehicle, and in a case in which the host vehicle has entered the first range set in the travel lane after having once left the travel lane, the control unit moves a host vehicle image illustrating the host vehicle to a pre-set position on the road surface image illustrating the travel lane.

In the display control device according to the seventh aspect, in a case in which the host vehicle has entered the first range set in the travel lane after having once left the travel lane, the control unit moves the host vehicle image to the pre-set position on the road surface image illustrating the travel lane. The display control device accordingly moves the host vehicle image to the pre-set position when the host vehicle has re-entered the travel lane after once leaving, enabling a driver to intuitively recognize the current positional relationship of the host vehicle.

A display control device according to an eighth aspect is any one of the first aspect to the seventh aspect, wherein the display unit is a meter display provided at a vehicle front side of a driver's seat of the vehicle.

In the display control device according to the eighth aspect, the display unit is a meter display provided at a vehicle front side of a driver's seat of the vehicle. The display control device is accordingly able to make a driver notice the inbound vehicle image by using the meter display, while suppressing any shift in gaze of the driver to a minimum, enabling movement of the inbound vehicle can be ascertained rapidly.

A display control method according to a ninth aspect is processing executable by a computer to perform processing. The processing includes displaying, at a display unit, a vehicle image illustrating at least one vehicle and a road surface image illustrating at least one travel lane in which the vehicle is traveling, and moving an inbound vehicle image illustrating an inbound vehicle that has entered a first range set in the travel lane to a pre-set position in the road surface image illustrating the travel lane entered by the inbound vehicle.

In the display control method according to the ninth aspect, the computer executes processing to display the vehicle image and the road surface image on the display unit. In the display control method, the computer executes processing to move the inbound vehicle image illustrating the inbound vehicle that has entered the first range set in the travel lane travelled by the vehicle to the pre-set position in the road surface image illustrating the travel lane entered by the inbound vehicle. The display control method accordingly, by moving the inbound vehicle image to the pre-set position in the road surface image illustrating the travel lane entered by the inbound vehicle, is able to suppress wobble of display position of the inbound vehicle image arising from the effect of detection conditions of the vehicle when presenting surrounding conditions by an image illustrating a vehicle and a travel lane.

A tenth aspect is a non-transitory recording medium storing a display control program. The display control program causes a computer to execute processing including displaying, at a display unit, a vehicle image illustrating at least one vehicle and a road surface image illustrating at least one travel lane in which the vehicle is traveling, and moving an inbound vehicle image illustrating an inbound vehicle that has entered a first range set in the travel lane to a pre-set position in the road surface image illustrating the travel lane entered by the inbound vehicle.

The display control program according to the tenth aspect causes the computer to execute the processing to display the vehicle image and the road surface image on the display unit. The display control program also causes the computer to execute the processing to move the inbound vehicle image illustrating the inbound vehicle that has entered the first range set in the travel lane travelled by the vehicle to a pre-set position in the road surface image illustrating the travel lane entered by the inbound vehicle. The display control program is accordingly, by moving the inbound vehicle image to the pre-set position in the road surface image illustrating the travel lane entered by the inbound vehicle, able to suppress wobble of display position of the inbound vehicle image arising from the effect of detection conditions of the vehicle when presenting surrounding conditions by an image illustrating a vehicle and a travel lane.

As described above, the display control device, the display control method, and the recording medium storing a display control program according to the present disclosure enable, when presenting surrounding conditions by an image illustrating a vehicle and a travel lane, suppression of wobble of display position of an image illustrating a vehicle arising from the effect of detection conditions of the vehicle.

### BRIEF DESCRIPTION OF THE DRAWINGS

Exemplary embodiments of the present disclosure will be described in detail based on the following figures, wherein:
Fig. 1 is a block diagram illustrating a schematic configuration of a host vehicle;
Fig. 2 is a schematic diagram of a front section of the interior of a vehicle cabin of a host vehicle, looking from a vehicle rear side;
Fig. 3 is an explanatory diagram to explain a display area on a first display unit;
Fig. 4 is a block diagram illustrating a schematic configuration of a display control device;
Fig. 5 is a block diagram illustrating an example of a functional configuration of a display control device;
Fig. 6 is a flowchart illustrating a flow of specific processing;
Fig. 7 is a subroutine illustrating a flow of display update processing;
Fig. 8 is a first explanatory diagram to explain a vehicle driving situation;
Fig. 9 is a first explanatory diagram illustrating a display example displayed on a display area of a first display unit;
Fig. 10 is a second explanatory diagram to explain a vehicle driving situation;
Fig. 11 is a second explanatory diagram illustrating a display example displayed on a display area of a first display unit;
Fig. 12 is a third explanatory diagram to explain a vehicle driving situation;
Fig. 13 is a third explanatory diagram illustrating a display example displayed on a display area of a first display unit;
Fig. 14 is a fourth explanatory diagram to explain a vehicle driving situation;
Fig. 15 is a fourth explanatory diagram illustrating a display example displayed on a display area of a first display unit;
Fig. 16 is a fifth explanatory diagram to explain a vehicle driving situation;
Fig. 17 is a sixth explanatory diagram to explain a vehicle driving situation;
Fig. 18 is a seventh explanatory diagram to explain a vehicle driving situation; and
Fig. 19 is an eighth explanatory diagram to explain a vehicle driving situation.

### DETAILED DESCRIPTION

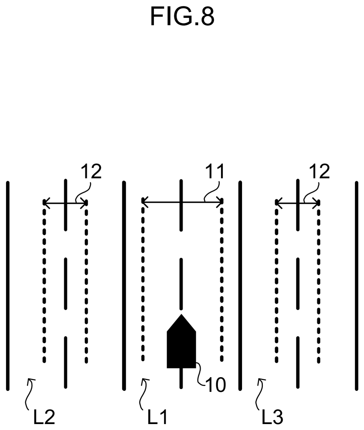

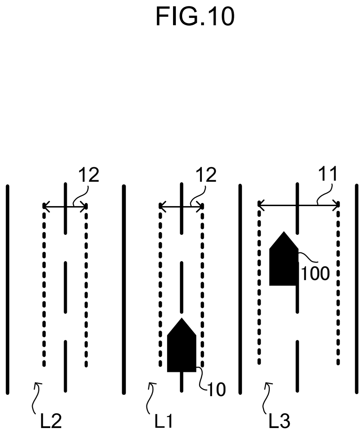

Description follows regarding vehicles according to the present exemplary embodiment. In the present exemplary embodiment, the vehicles include a host vehicle 10 (see Fig. 8 etc.) driven by a specific driver, and an other-vehicle 100 driven by a driver different to the specific driver (see Fig. 10 etc.). The host vehicle 10 is an example of an "host vehicle" of the present disclosure, and the other-vehicle 100 is an example of an "other-vehicle" of the present disclosure.

### First Exemplary Embodiment

First description follows regarding a first exemplary embodiment of vehicles according to the present exemplary embodiment. Note that the host vehicle 10 and the other-vehicle 100 each include basically the same configuration, and so the host vehicle 10 will be described below as a representative example thereof.

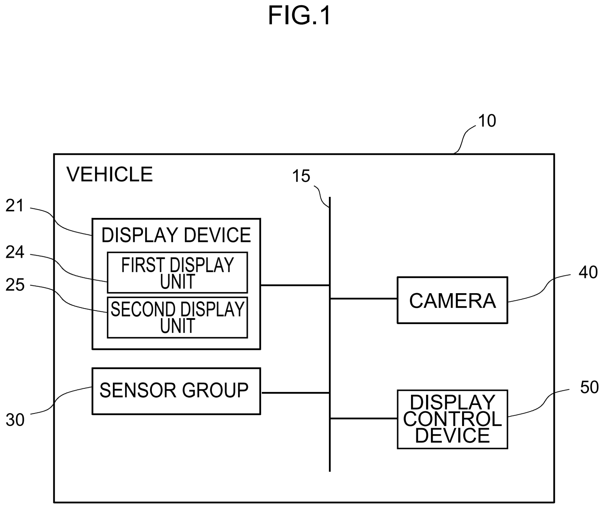

Fig. 1 is a block diagram illustrating a schematic configuration of the host vehicle 10.

As illustrated in Fig. 1, the host vehicle 10 includes a display device 21, a sensor group 30, cameras 40, and a display control device 50. These configuration elements are mutually connected through an external bus (communication bus) 15.

The display device 21 displays images related to proposals for operations related to the functions of the host vehicle 10, explanations of these functions, and the like. In the present exemplary embodiment, a first display unit 24 and a second display unit 25 are provided as the display device 21. The first display unit 24 is an example of a "display unit" of the present disclosure. Note that details are given later regarding the first display unit 24 and the second display unit 25.

The sensor group 30 includes various sensors for detecting a state and surrounding conditions of the host vehicle 10. Specifically, the sensor group 30 includes a 3D-LiDAR, a milliwave sensor, an infrared sensor, a turn indicator sensor, an acceleration position sensor, a shift position sensor, an illumination sensor, a vehicle speed sensor, a steering angle sensor, an angular velocity sensor, a global positioning system (GPS) sensor, a gyrosensor, and/or an accelerometer. The sensor group 30 outputs detection results from each of the sensors to the display control device 50.

The cameras 40 are imaging devices that each perform imaging using an imaging device such as a charge coupled device (CCD) image sensor, a complementary metal oxide semiconductor (CMOS) image sensor, or the like. The cameras 40 are provided to the front, rear, left side, and right side of the host vehicle 10, and image conditions in the periphery of the host vehicle 10. For example, images captured by the camera 40 provided at the vehicle front are employed to recognize an other-vehicle 100 traveling in front of a vehicle, inter-vehicle distance to the other-vehicle 100, vehicle lanes, traffic lights, and the like. The images captured by the cameras 40 are output to the display control device 50. Note that the cameras 40 may be configured by imaging devices used in other applications, such as in a drive recorder, advanced driver assistance system (ADAS), or the like.

The display control device 50 may, for example, be an electronic control unit (ECU) that performs various controls. The display control device 50 is an example of a "display control device" and a "computer" of the present disclosure.

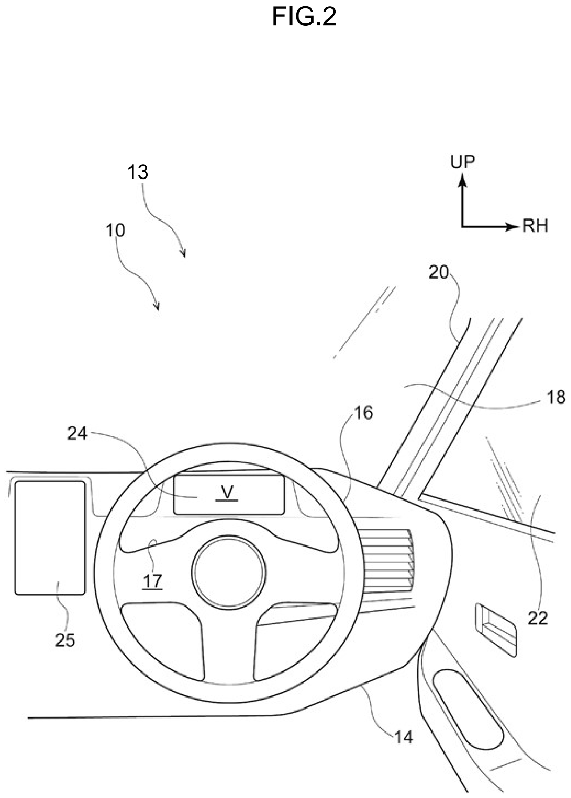

Fig. 2 is a schematic diagram illustrating a front section of an interior of a vehicle cabin 13 of the host vehicle 10, as viewed from the vehicle rear side. In Fig. 2, arrow UP indicates upward in a vehicle height direction, and arrow RH indicates a vehicle width direction right side. In the following description, reference to up and down directions and left and right directions respectively indicate up and down in the vehicle height direction, and left and right in the vehicle width direction.

As illustrated in Fig. 2, an instrument panel 14 is provided in the front section interior of the vehicle cabin 13 of the host vehicle 10. The instrument panel 14 extends along the vehicle width direction, with a steering wheel 16 provided at a vehicle right side of the instrument panel 14. Namely, the host vehicle 10 is, as an example, a right hand drive vehicle with the steering wheel 16 provided on the right, and a driver's seat provided on the vehicle right side. Note that there is no limitation thereto, and the host vehicle 10 may be a left hand drive vehicle with the driver's seat provided on the vehicle left side.

A windshield glass 18 is provided at a front end portion of the instrument panel 14. The windshield glass 18 extends in both the vehicle height direction and the vehicle width direction, and partitions between the interior of the vehicle cabin 13 and the exterior of the vehicle cabin 13.

A vehicle right side end portion of the windshield glass 18 is fixed to a vehicle right side front pillar 20. The front pillar 20 extends in the vehicle height direction, and the windshield glass 18 is fixed to a vehicle width direction inside end portion of this front pillar 20. A front end portion of a front side glass 22 is fixed to a vehicle width direction outside end portion of the front pillar 20. Note that a vehicle left side end portion of the windshield glass 18 is fixed to a non-illustrated vehicle left side front pillar.

A first display unit 24 equipped with an image display area V is provided to the instrument panel 14. The first display unit 24 is configured by a meter display provided at a vehicle front side of the driver's seat on the vehicle right side of the instrument panel 14. The first display unit 24 is connected to various meter instruments installed to the host vehicle 10, and is provided at a position falling within the visual field of the driver in a state gazing in the vehicle forward direction.

The second display unit 25 is also provided to the instrument panel 14. The second display unit 25 is configured by a center display installed to a vehicle width direction central portion of the instrument panel 14.

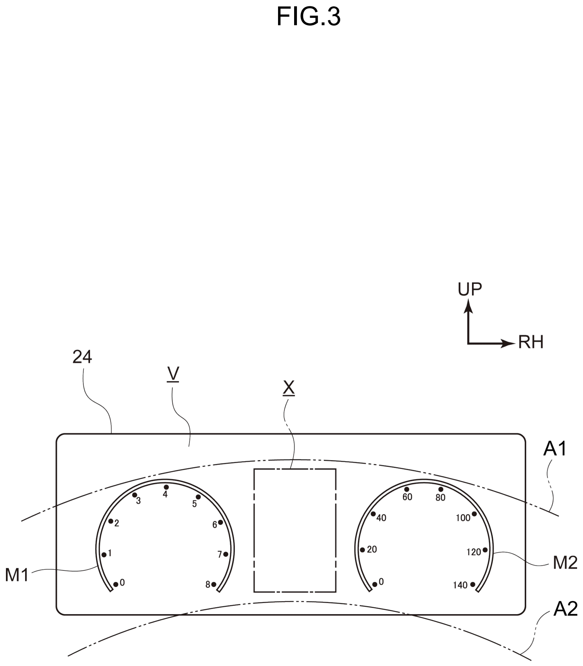

Fig. 3 is a diagram to explain a display area of the meter display, serving as a display area V of the first display unit 24.

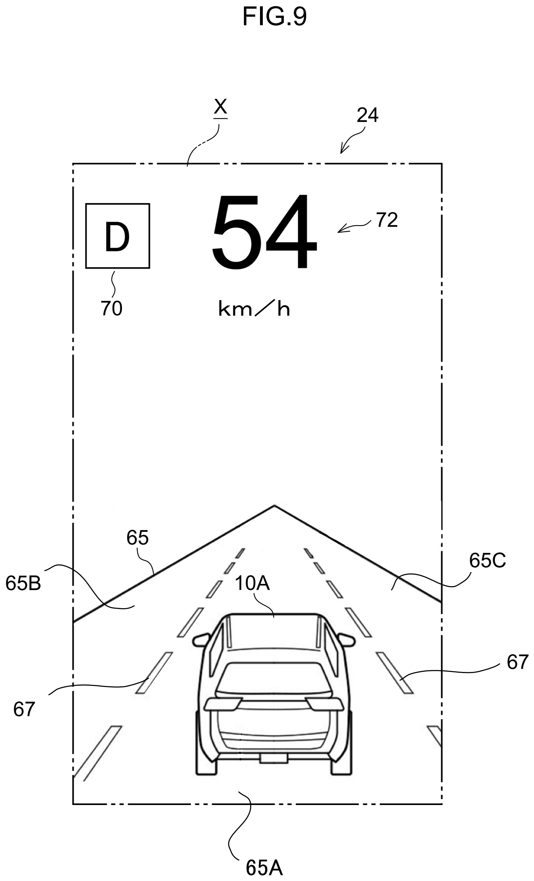

The display area V of the first display unit 24 is illustrated in Fig. 3. In the present exemplary embodiment, a host vehicle image 10A (see Fig. 9 etc.), which is an image illustrating the host vehicle 10, and a surrounding condition image, which is an image illustrating surrounding conditions of the host vehicle 10, are displayed in a display area X, this being part of the display area V. Note that specific examples of such images are described later.

The display area X is a region visible to a driver seated in the driver's seat through an opening 17 in the steering wheel 16 (see Fig. 2). Specifically, as illustrated in Fig. 3, the display area X is center of a region visible when looking from between an upper edge line A1 and a lower edge line A2 of the opening 17. Meter displays M1, M2 illustrating measurement instrument meters of the host vehicle 10 are displayed in the display area V at the left and right of the display area X.

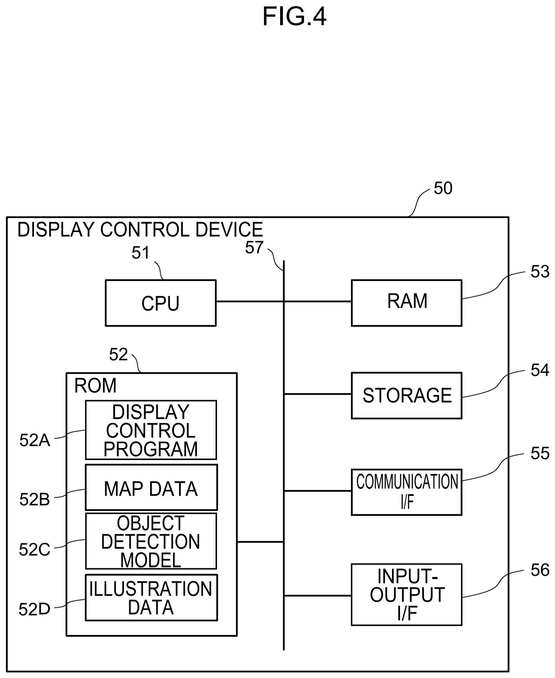

Fig. 4 is a block diagram illustrating a schematic configuration of the display control device 50.

As illustrated in Fig. 4, the display control device 50 is configured including a central processing unit (CPU) 51, read only memory (ROM) 52, random access memory (RAM) 53, storage 54, a communication interface (I/F) 55, and an input-output I/F 56. Each of the configuration elements are connected together through an internal bus 57 so as to be capable of communicating with each other.

The CPU 51 is a central processing unit that executes various programs and controls each section. Namely, the CPU 51 reads a program from the ROM 52, and executes the program using the RAM 53 as a work area. The CPU 51 is an example of a "processor" of the present disclosure.

The ROM 52 is stored with various programs and various data. The RAM 53 serves as a work area for temporarily storing programs and/or data.

The storage 54 is configured by a storage medium, such as an embedded MultiMediaCard (eMMC), Universal Flash Storage (UFS), or the like, and stores various programs and various data. The storage 54 and the CPU 51 are connected together by the eMMC or UFS interface.

Moreover, each of the components provided in the display control device 50, such as the ROM 52, the storage 54, and the like, are preferably a medium having tamper resistance, such as a hardware security module (HSM).

The communication I/F 55 is an interface for connecting to other ECUs. This interface employs a communication standard by Ethernet (registered trademark).

The input-output I/F 56 is an interface to communicate with onboard devices installed to the host vehicle 10, such as the display device 21, the sensor group 30, and the cameras 40.

A display control program 52A, map data 52B, an object detection model 52C, and illustration data 52D are stored in the ROM 52.

The display control program 52A is a program to execute various processing in the CPU 51. When the display control program 52A is executed, the display control device 50 uses the configuration illustrated in Fig. 4 to execute processing based on the display control program 52A. The display control program 52A is an example of a "display control program" of the present disclosure.

The map data 52B is high-precision map data representing a map of the entire country for the location of the host vehicle 10.

The object detection model 52C is a model input with images captured by the cameras 40 for performing region recognition of objects appearing in the captured images and object class (classification) determination. The object detection model 52C may, for example, be configured using an applicable known model, such as a you only look once (YOLO) or a single shot multibox detector (SSD).

The objects referred to above include, for example, people, animals, vehicles, and the like. The classes referred to above include a child, an adult, a pensioner, and the like for people, a dog, a cat, a horse, and the like for animals, a two-wheeled vehicle, a three-wheeled vehicle, a car, a truck, and the like for vehicles.

The illustration data 52D is data representing illustration designs for each object to be displayed on the first display unit 24.

Next, description follows regarding a functional configuration of the display control device 50.

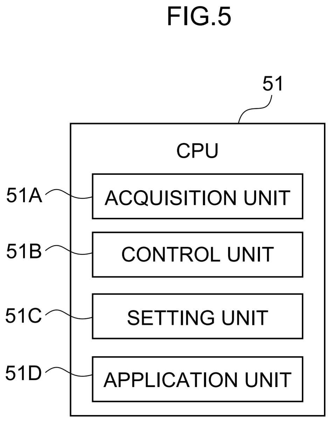

Fig. 5 is a block diagram illustrating an example of a functional configuration of the display control device 50.

As illustrated in Fig. 5, the CPU 51 of the display control device 50 includes, as functional configuration, an acquisition unit 51A, a control unit 51B, a setting unit 51C, and an application unit 51D. Each of these functional configurations is realized by the CPU 51 reading out and executing the display control program 52A stored in the ROM 52. The control unit 51B is an example of a "control unit" of the present disclosure, and the setting unit 51C is an example of a "setting unit" of the present disclosure.

The acquisition unit 51A acquires various information acquirable by the host vehicle 10. Specifically, as the various information, the acquisition unit 51A acquires detection information of detection results of the various sensors configuring the sensor group 30, images captured by the cameras 40, and the like.

The control unit 51B performs display control related to display on the display device 21. For example, as the display control, based on detection information acquired by the acquisition unit 51A, the control unit 51B displays the host vehicle image 10A and surrounding condition image on the first display unit 24 as viewed from a virtual viewpoint.

The "virtual viewpoint" referred to here is a viewpoint set in 3-dimensional virtual space having a position of the host vehicle image 10A as the origin, with the virtual viewpoint defined by given viewpoint coordinates and viewpoint angle (direction) in virtual space. As an example, the virtual viewpoint is a viewpoint looking down at a designated viewpoint angle at the host vehicle 10 and the periphery thereof from coordinates of a specific viewpoint positioned above a host vehicle image 10A in virtual space. The surrounding condition image includes a road surface image 65 (see Fig. 9 etc.) illustrating a road surface including a sidewalk and a road, and an object image illustrating objects other than the host vehicle 10, such as an other-vehicle 100, pedestrians, and the like. The host vehicle image 10A is an example of an "host vehicle image" of the present disclosure, and the road surface image 65 is an example of a "road surface image" of the present disclosure.

For each of the travel lanes traveled by the respective vehicles, such as the host vehicle 10 and the other-vehicle 100, the setting unit 51C sets control ranges for controlling a display position of vehicle images illustrating the respective vehicles. The control ranges are specific areas determined with reference to a width direction central position of each of the travel lanes.

The setting unit 51C estimates the width direction central position of each of the travel lanes based on detection information acquired by the acquisition unit 51A. The setting unit 51C then, with reference to the central positions, sets a movement start range having a left-right width Xm, and a movement end range having a left-right width Ym, as the control ranges for the travel lanes. Xm and Ym are set to a range narrower than the vehicle lane width Zm, and the movement start range width Xm is set wider than the movement end range width Ym.

For example, the setting unit 51C individually sets respective movement start ranges and movement end ranges for each vehicle lane for a road having three vehicle lanes each way. Note that the movement end range is an example of a "first range" of the present disclosure, and the movement start range is an example of a "second range" of the present disclosure.

The application unit 51D applies the control ranges set by the setting unit 51C to each of the vehicles, such as the host vehicle 10 and the other-vehicle 100. Based on detection information acquired by the acquisition unit 51A, the application unit 51D identifies each vehicle present in the surroundings of the host vehicle 10 (for example: only the host vehicle 10; both the host vehicle 10 and the other-vehicle 100), and furthermore estimates the travel lane where each of the vehicles is currently positioned (hereafter referred to as the "current travel lane").

As an example, based on proportions occupied by a vehicle body with respect to each vehicle lane, the application unit 51D assumes the travel lane with the largest occupied proportion to be the current travel lane for each vehicle.

The application unit 51D then applies the movement start range to the current travel lane of each vehicle, and applies the movement end range to the other travel lanes not the current travel lane. This thereby enables appropriate display control according to the movement start and movement end for each vehicle.

For example, when the host vehicle 10 and the other-vehicle 100 are present on a road having three vehicle lanes each way, the application unit 51D sets three vehicle lanes' worth of the control ranges individually for each vehicle, and applies these vehicle-specific control ranges. Note that specific examples of control ranges are described later.

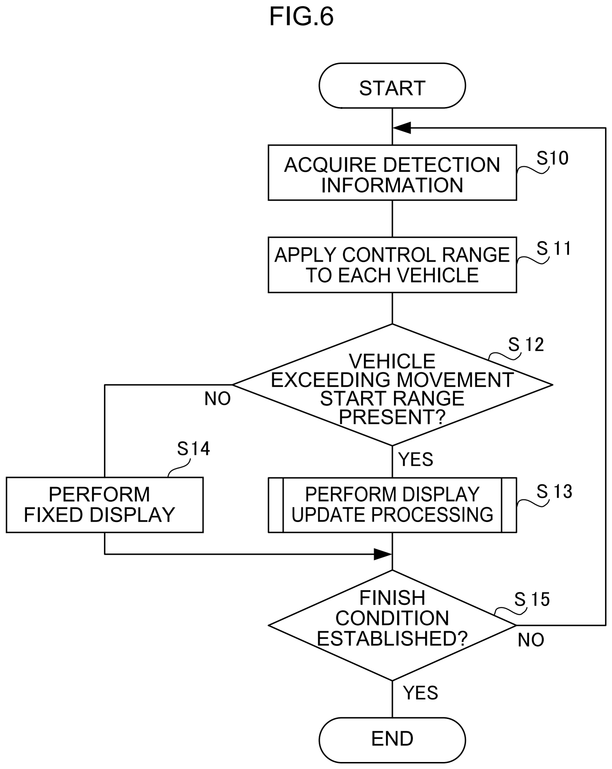

Fig. 6 is a flowchart illustrating a flow of specific processing executed by the display control device 50. The CPU 51 reads the display control program 52A from the ROM 52, and performs the specific processing by expanding and executing the display control program 52A in the RAM 53. As an example, the specific processing is executed automatically by being repeated at a given time interval while the host vehicle image 10A and the surrounding condition image are being displayed on the first display unit 24.

At step S10 illustrated in Fig. 6, the CPU 51 acquires detection information detectable by the host vehicle 10. The detection information includes, for example, object information detected by the 3D-LiDAR, and captured images captured by the cameras 40. The CPU 51 then proceeds to step S11.

At step S11, the CPU 51 identifies positional relationships of each vehicle with reference to each vehicle lane based on the detection information acquired at step S10, and applies control ranges according to these positional relationships to each vehicle. The CPU 51 then proceeds to step S12.

At step S12, the CPU 51 determines whether or not there is a vehicle present that has exceeded the movement start ranges applied at step S11. The CPU 51 proceeds to step S13 when determined that there is a vehicle exceeding the movement start range present (step S12: YES). However, the CPU 51 proceeds to step S14 when determined that there is no vehicle that has exceeded the movement start range (step S12: NO). As an example, based on the detection information, the CPU 51 determines the presence of a vehicle that has exceeded the movement start range when over half the vehicle body is adjudged to be protruding from the movement start range.

At step S13, the CPU 51 executes display update processing to update display content of an inbound vehicle image illustrating an inbound vehicle, which is a vehicle that has exceeded the movement start range. Note that details regarding display update processing are described later. The CPU 51 then proceeds to step S15.

At step S14, the CPU 51 displays the vehicle images illustrating the respective vehicles by fixed display at a pre-set position on the road surface image 65 illustrating the travel lane travelled by each vehicle. In the present exemplary embodiment, these pre-set positions are width direction central positions in each lane of the road surface image 65. The CPU 51 then proceeds to step S15.

At step S15, the CPU 51 determines whether or not a predetermined finish condition has been established. The CPU 51 ends the specific processing when determined that the finish condition has been established (step S15: YES). However, the CPU 51 returns to step S10 when determined that the finish condition has not been established (step S15: NO). As an example, the CPU 51 determines that the finish condition has been established when the ignition switch of the host vehicle 10 has been switched OFF.

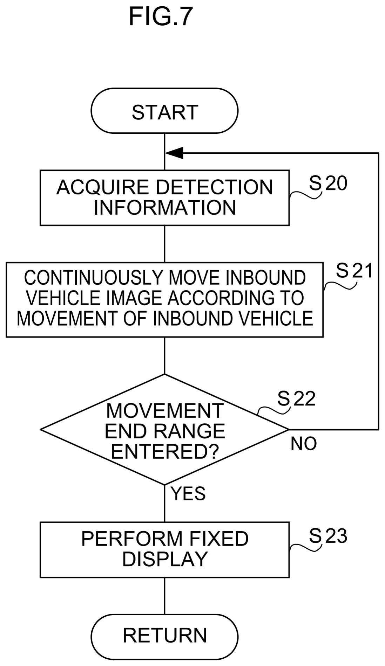

Fig. 7 is a flowchart illustrating a flow of display update processing executed by the display control device 50, this being a subroutine performed at S13 of the main routine of Fig. 6. The CPU 51 reads the display control program 52A from the ROM 52, and performs the display update processing by expanding and executing the display control program 52A in the RAM 53.

At step S20 illustrated in Fig. 7, the CPU 51 acquires detection information detectable by the host vehicle 10. The CPU 51 then proceeds to step S21.

At step S21, the CPU 51 continuously moves the inbound vehicle image in accordance with movement of the inbound vehicle. The CPU 51 then proceeds to step S22.

At step S22, the CPU 51 determines whether or not the inbound vehicle has entered the movement end range. The CPU 51 proceeds to step S23 when determined that the inbound vehicle has entered the movement end range (step S22: YES). However, the CPU 51 returns to step S20 when determined that the inbound vehicle has not entered the movement end range (step S22: NO). As an example, the CPU 51 determines that the inbound vehicle has entered the movement end range when, based on the detection information, over half the vehicle body of the inbound vehicle is adjudged to be contained in the movement end range.

At step S23, the CPU 51 moves the inbound vehicle image to the width direction central position of the road surface image 65 illustrating the travel lane that the inbound vehicle has entered, and performs fixed display at the central position. The CPU 51 then returns to the main routine, and proceeds to step S15 of Fig. 6.

Next, description follows regarding changes to the display content of the first display unit 24 based on the above specific processing and display update processing, with reference to Fig. 8 to Fig. 15.

Fig. 8 is a first explanatory diagram to explain a vehicle driving situation. The road illustrated in Fig. 8 is provided with three vehicle lanes, these being a central vehicle lane L1, a left vehicle lane L2, and a right vehicle lane L3.

In Fig. 8, the host vehicle 10 travels at the width direction center of the central vehicle lane L1, and there is no other vehicle present in the periphery thereof. In such cases the CPU 51 applies the movement start range 11 to the central vehicle lane L1 that is the current travel lane for the host vehicle 10, and applies the movement end range 12 to the left vehicle lane L2 and the right vehicle lane L3.

Fig. 9 is a first explanatory diagram illustrating a display example displayed on the display area X of the first display unit 24. Specifically, Fig. 9 is a display example corresponding to the driving situation of the vehicle illustrated in Fig. 8.

As illustrated in Fig. 9, a shift information 70 and a vehicle speed information 72 are displayed at the top of the display area X.

The shift information 70 is information indicating the shift position of the host vehicle 10, and "D" is displayed in Fig. 9 to indicate that the shift position is the D range.

The vehicle speed information 72 is information indicating the speed of the host vehicle 10, and in Fig. 9 "54 km/h" is displayed to indicate that the vehicle speed is 54 km/h.

Moreover, a host vehicle image 10A and a surrounding condition image are displayed below the shift information 70 and the vehicle speed information 72. The surrounding condition image includes the road surface image 65.

A demarcation line image 67 to demarcate the vehicle lanes on the road is displayed on the road surface image 65. The road is thereby demarcated into three vehicle lanes, a vehicle lane 65A corresponding to the central vehicle lane L1, a vehicle lane 65B corresponding to the left vehicle lane L2, and a vehicle lane 65C corresponding to the right vehicle lane L3. In Fig. 9 the host vehicle image 10A is displayed on the vehicle lane 65A.

The host vehicle image 10A is an illustrative image illustrating the host vehicle 10 generated based on a given illustrative design represented by the illustration data 52D. As described above, the host vehicle 10 is traveling at the width direction center of the central vehicle lane L1, and is present inside the movement start range 11 set in the central vehicle lane L1. The host vehicle image 10A is accordingly displayed fixed so as to be positioned at the width direction center of the vehicle lane 65A as viewed from the virtual viewpoint.

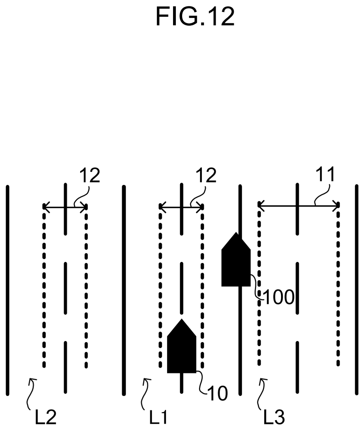

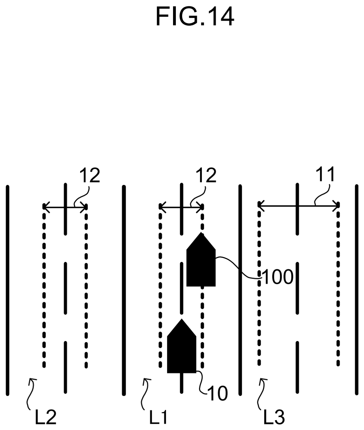

Fig. 10 is a second explanatory diagram to explain a vehicle driving situation. Fig. 10 illustrates a state in which an other-vehicle 100 has appeared in the right vehicle lane L3. For clarity, the control ranges applied to the host vehicle 10 are omitted from Fig. 10, and only the control ranges applied to the other-vehicle 100 are illustrated therein. Note that similar applies to Fig. 12 and Fig. 14, with only the control ranges for the other-vehicle 100 being illustrated therein. Moreover, Fig. 10, Fig. 12, and Fig. 14 illustrate time series of states while the other-vehicle 100 is changing a vehicle lane, described in detail later.

As illustrated in Fig. 10, the other-vehicle 100 is traveling further left than the width direction center of the right vehicle lane L3. When doing so, the CPU 51 determines that the current vehicle lane of the other-vehicle 100 is the right vehicle lane L3, and applies the movement start range 11 to the right vehicle lane L3, and applies the movement end range 12 to the central vehicle lane L1 and the left vehicle lane L2. Note that there is no limitation thereto and a configuration may be adopted in which, for a vehicle traveling along a travel lane at the edge (for example, the vehicle lane at the right edge or at the left edge), the CPU 51 applies the movement start range 11 to the current vehicle lane, applies the movement end range 12 to the single adjacent vehicle lane alone, and does not apply a control range to the other vehicle lane. For example, in the situation illustrated in Fig. 10, a configuration may be adopted in which, for the other-vehicle 100, the CPU 51 applies the movement start range 11 to the right vehicle lane L3, applies the movement end range 12 to the central vehicle lane L1, and does not apply a control range to the left vehicle lane L2.

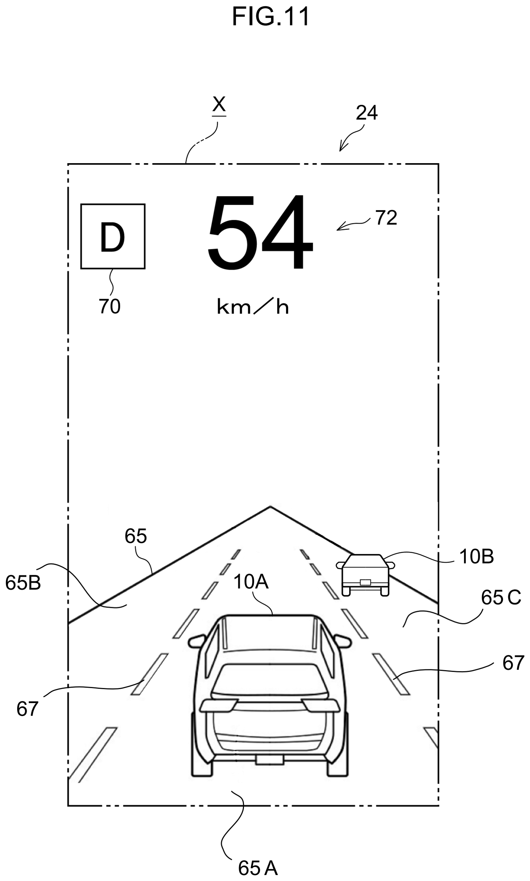

Fig. 11 is a second explanatory diagram illustrating a display example displayed on the display area X of the first display unit 24. Specifically, Fig. 11 is an example of a display corresponding to the vehicle driving situation illustrated in Fig. 10.

As illustrated in Fig. 11, an other-vehicle image 10B illustrating the other-vehicle 100 on the right vehicle lane 65C is displayed in the display area X as the surrounding condition image. The other-vehicle image 10B is an illustrative image illustrating the other-vehicle 100 generated based on a given illustrative design represented by the illustration data 52D.

As illustrated in Fig. 10 described above, the other-vehicle 100 is performing a vehicle lane change, and is traveling at a position further left than the width direction center of the right vehicle lane L3. However, due to the other-vehicle 100 being present inside the movement start range 11 set for the right vehicle lane L3, the other-vehicle image 10B is displayed fixed so as to be positioned at the width direction center of the vehicle lane 65C as viewed from the virtual viewpoint.

Fig. 12 is a third explanatory diagram to explain a vehicle driving situation. As illustrated in Fig. 12, the other-vehicle 100 has exceeded the movement start range 11 set in the right vehicle lane L3, and is at a stage prior to entering the movement end range 12 set in the central vehicle lane L1. Namely, the other-vehicle 100 has exceeded the movement start range 11 and is in a state partway through moving toward the width direction center of the central vehicle lane L1.

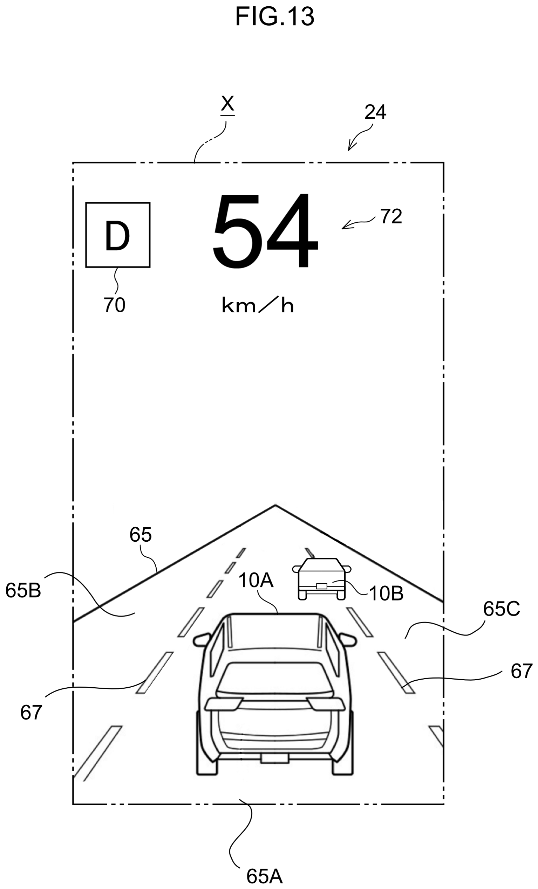

Fig. 13 is a third explanatory diagram illustrating a display example displayed on a display area X of the first display unit 24. Specifically, Fig. 13 is a display example corresponding to the vehicle driving situation illustrated in Fig. 12.

In Fig. 13, because the other-vehicle 100 has exceeded the movement start range 11 set in the right vehicle lane L3, fixed control is canceled for the other-vehicle image 10B that is being displayed fixed at the width direction center of the vehicle lane 65C. The other-vehicle image 10B is thereby switched to a display mode of continuous movement so as to follow actual movements of the other-vehicle 100 based on the detection information, and is displayed in the illustrated state at a position straddling the vehicle lane 65A.

Fig. 14 is a fourth explanatory diagram to explain a vehicle driving situation. As illustrated in Fig. 14, the other-vehicle 100 is in a state entering the movement end range 12 set in the central vehicle lane L1. When doing so over half the vehicle body of the other-vehicle 100 is contained inside the movement end range 12, and based on this condition, the CPU 51 determines that the other-vehicle 100 has entered the movement end range 12.

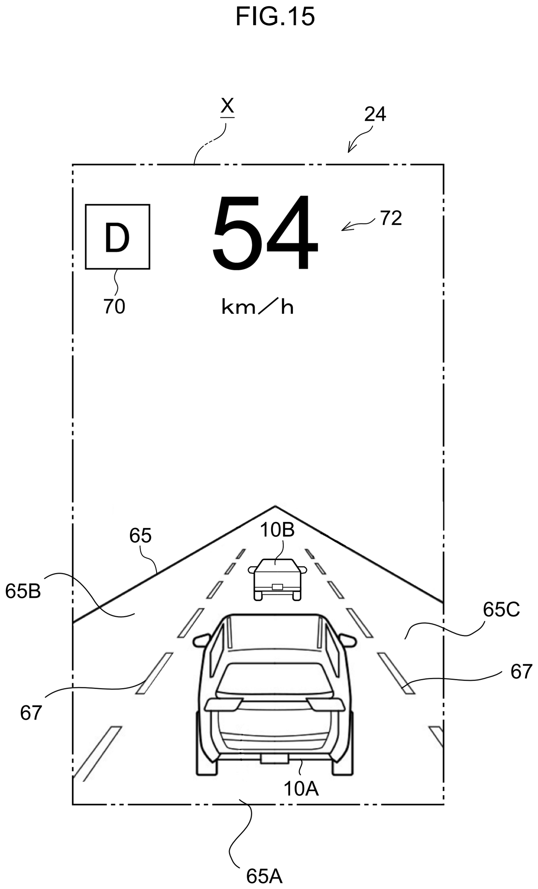

Fig. 15 is a fourth explanatory diagram illustrating a display example displayed on the display area X of the first display unit 24. Specifically, Fig. 15 is a display example corresponding to the vehicle driving situation illustrated in Fig. 14.

In Fig. 15, because the other-vehicle 100 has entered the movement end range 12 set in the central vehicle lane L1, the other-vehicle image 10B is positioned at the width direction center of the vehicle lane 65A, and is displayed moved so as to be at a position at the progression direction in front of the host vehicle image 10A.

As described above, in the display control device 50, the CPU 51 displays, on the first display unit 24, a vehicle image illustrating at least one vehicle and the road surface image 65. The CPU 51 then moves the other-vehicle image 10B, which illustrates the other-vehicle 100, this being an inbound vehicle that has entered the movement end range 12 set in the central vehicle lane L1 that is the travel lane of the host vehicle 10, by moving the other-vehicle image 10B to a pre-set position on the vehicle lane 65A illustrating the central vehicle lane L1 entered by the other-vehicle 100. Due to the other-vehicle image 10B accordingly being moved to the pre-set position on the vehicle lane 65A, the display control device 50 is able, when surrounding conditions are being presented by an image illustrating vehicles and travel lanes, to suppress wobble in the display position of the other-vehicle image 10B arising from the effect of detection conditions of the host vehicle 10.

Moreover, in the display control device 50, the CPU 51 applies the movement start range 11 set for the right vehicle lane L3 to the other-vehicle 100 while the other-vehicle 100 is traveling in the right vehicle lane L3 prior to entering the central vehicle lane L1. The CPU 51 displays the other-vehicle image 10B fixed to the pre-set position on the vehicle lane 65C illustrating the right vehicle lane L3 travelled by the other-vehicle 100 until the other-vehicle 100 has exceeded the movement start range 11. The display control device 50 is thereby able to suppress unnecessary swaying in the display of the other-vehicle image 10B and instantaneous changes in the position thereof.

Moreover, in the display control device 50, after the other-vehicle 100 has exceeded the movement start range 11, the CPU 51 continuously moves the other-vehicle image 10B according to the movement of the other-vehicle 100 until the other-vehicle 100 has entered the movement end range 12 set for the central vehicle lane L1. The display control device 50 accordingly enables a driver to naturally and intuitively recognize movements of the other-vehicle 100 visually.

Moreover, in the display control device 50, when the other-vehicle 100 is changing vehicle lanes to be in front, in a progression direction, of the host vehicle 10 and the host vehicle 10 has entered the movement end range 12 set in the central vehicle lane L1, the CPU 51 moves the other-vehicle image 10B to be in front, in a progression direction, of the host vehicle image 10A at a pre-set position on the vehicle lane 65A illustrating the central vehicle lane L1. The display control device 50 thereby enables the presence of the other-vehicle 100 that has barged into the travel path of the host vehicle 10, and the positional relationship thereto, to be intuitively recognized by the driver.

Moreover, in the display control device 50, the pre-set position on the road surface image 65 is the width direction central position on each of the vehicle lanes of the road surface image 65. This means that the display control device 50 is able to display the position of the other-vehicle image 10B in a unified manner, enabling visibility to be improved and display variability to be suppressed.

Moreover, in the display control device 50, the first display unit 24 is a meter display provided at a vehicle front side of a driver's seat of the host vehicle 10. The display control device 50 thereby enables a driver to be made aware of the other-vehicle image 10B using the meter display, while suppressing any shift in gaze of the driver to a minimum, and enabling movement of the other-vehicle 100 to be ascertained rapidly.

### Second Exemplary Embodiment

Next, description follows regarding a second exemplary embodiment of a vehicle according to the present exemplary embodiment, with duplicate content to the above exemplary embodiment either omitted or simplified.

Although an example was described in the above exemplary embodiment in which the other-vehicle 100 was the inbound vehicle, the inbound vehicle is not limited to being the other-vehicle 100. In the second exemplary embodiment description follows regarding control when the inbound vehicle is the host vehicle 10.

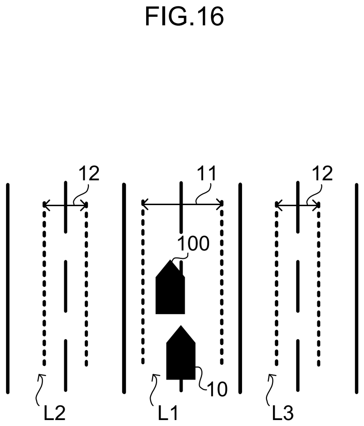

Fig. 16 is a fifth explanatory diagram to explain a vehicle driving situation. As illustrated in Fig. 16, although both the host vehicle 10 and the other-vehicle 100 are present on the road, for clarity, only the control ranges applied to the host vehicle 10 are illustrated therein, and the control ranges applied to the other-vehicle 100 are omitted from illustration. Moreover, Fig. 16 to Fig. 19 illustrate time series of states in which the host vehicle 10 is traveling so as to avoid the other-vehicle 100, as described in detail later.

In such a situation, the host vehicle 10 is traveling along the width direction center of the central vehicle lane L1, and the other-vehicle 100 is stationary at the progression direction in front of the central vehicle lane L1. The CPU 51 determines that the current vehicle lane of the host vehicle 10 is the central vehicle lane L1, and so applies the movement start range 11 to the central vehicle lane L1, and applies the movement end range 12 to the left vehicle lane L2 and the right vehicle lane L3.

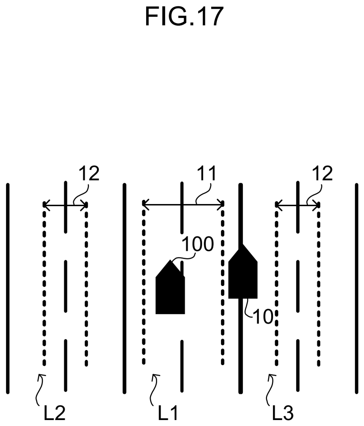

Fig. 17 is a sixth explanatory diagram to explain a vehicle driving situation. As illustrated in Fig. 17, the host vehicle 10 travels so as to exceed the movement start range 11 set in the central vehicle lane L1 in order to avoid the other-vehicle 100 stationary at the progression direction in front. The host vehicle 10 is accordingly present at a position straddling the central vehicle lane L1 and the right vehicle lane L3.

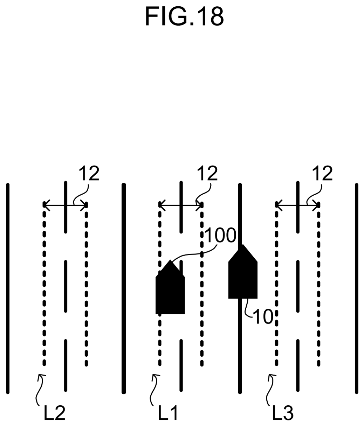

Fig. 18 is a seventh explanatory diagram to explain a vehicle driving situation. As illustrated in Fig. 17, the host vehicle 10 has exceeded the movement start range 11 set in the central vehicle lane L1, and is in a state in which its entire vehicle body protrudes outside the movement start range 11. Based on this, the CPU 51 determines that the host vehicle 10 has exceeded the movement start range 11. The CPU 51 updates the control range for the host vehicle 10 in the central vehicle lane L1 according to this determination result, and applies the movement end range 12 instead of the movement start range 11. This means that, in the state illustrated in Fig. 18, the movement end range 12 is applied for the host vehicle 10 to each vehicle lane of the central vehicle lane L1, the left vehicle lane L2, the right vehicle lane L3.

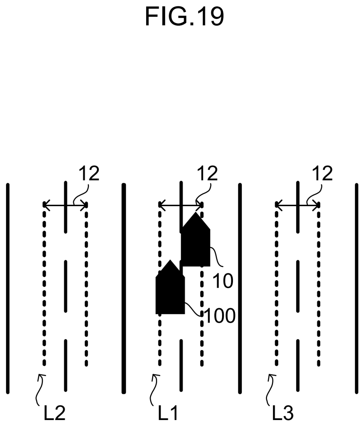

Fig. 19 is an eighth explanatory diagram to explain a vehicle driving situation. Fig. 19 illustrates a state in which the host vehicle 10 has entered the movement end range 12 set in the central vehicle lane L1, and over half of the vehicle body of the host vehicle 10 is contained in the movement end range 12. Based on this condition, the CPU 51 determines that the host vehicle 10 has entered the movement end range 12. Although not illustrated in the drawings, on the first display unit 24, the host vehicle image 10A illustrating the host vehicle 10, this being an inbound vehicle that has entered the movement end range 12, is displayed moved as far as the width direction center of the vehicle lane 65A illustrating the central vehicle lane L1.

As described above, in the display control device 50, in a case in which the host vehicle 10 has entered the movement end range 12 set on the central vehicle lane L1 after once leaving the central vehicle lane L1, the CPU 51 moves the host vehicle image 10A to a pre-set position on the vehicle lane 65A illustrating the central vehicle lane L1, specifically to the width direction center thereof. This accordingly means that even in a case in which the host vehicle 10 has re-entered a travel lane after having once left the travel lane, the display control device 50 moves the host vehicle image 10A to the pre-set position, enabling a current positional relationship of the host vehicle 10 to be intuitively recognized by the driver.

### Third Exemplary Embodiment

Next, description follows regarding a third exemplary embodiment of a vehicle according to the present exemplary embodiment, with duplicate content to the above exemplary embodiments either omitted or simplified.

In the third exemplary embodiment, the setting unit 51C is configured to dynamically change the width of the movement start range 11 and the movement end range 12 according to a type of the inbound vehicle.

The setting unit 51C uses detection information acquired by the acquisition unit 51A and the object detection model 52C stored on the ROM 52 to identify a type of the inbound vehicle. The type of inbound vehicle is, for example, classified into being a car, a truck, or a two-wheeled vehicle.

The setting unit 51C dynamically changes a width of the movement start range 11 and the movement end range 12 that should be applied to an inbound vehicle based on the identified type of the inbound vehicle. Specifically, in a case in which the inbound vehicle type is a truck, because the vehicle body size is larger than that of a car, the setting unit 51C sets widths of the movement start range 11 and the movement end range 12 so as to be relatively wider. However, in a case in which the inbound vehicle type is a two-wheeled vehicle, because the vehicle body size is small, the setting unit 51C sets the width of the movement start range 11 and the movement end range 12 relatively narrower.

Due to adopting the above configuration, the display control device 50 enables display control appropriate to the characteristics of the inbound vehicle, and enables the visibility of the inbound vehicle image to be improved.

### Other

Although detailed explanation has been given above regarding exemplary embodiments of the present disclosure, with reference to the appended drawings, the technical scope of the present disclosure is not limited by such examples. It will be apparent to a person of ordinary skill in the art of the present disclosure that various modifications and improvements can be arrived at within the scope of the technical idea as recited by the scope of the patent claims, and obviously such modifications and improvements should be understood as belonging to the technical range of the present disclosure.

The advantageous effects described above for the above exemplary embodiments are merely explanatory and indicative, and are not limited to those described in the above exemplary embodiments. Namely, in the technology according to the present disclosure, together with the advantageous effects described in the above exemplary embodiments, or instead of the advantageous effects described in the above exemplary embodiments, other advantageous effects may be exhibited as will be apparent from the above exemplary embodiments to a person of ordinary skill in the art of the present disclosure.

The processing described in the above exemplary embodiments can be implemented by a dedicated hardware circuit. In such cases, the processing may be executed by a single hardware unit alone, or may be executed by plural hardware units.

In the above exemplary embodiments, the display control program 52A was stored in the ROM 52. However, there is no limitation thereto, and the display control program 52A may be stored in the storage 54.

In the above exemplary embodiments, an example has been given in which there are three vehicle lanes, the vehicle lane 65A, the vehicle lane 65B, and the vehicle lane 65C as the vehicle lanes illustrated in the road surface image 65, however there is no limitation thereto. The number of vehicle lanes that are the subject of display in the road surface image 65 is at least one vehicle lane, and may, for example, be one vehicle lane, two vehicle lanes, or four or more vehicle lanes. Moreover, even when there is a vehicle present outside the display range of the road surface image 65, if this vehicle is at a position detectable by the sensor group 30 and/or the cameras 40, a control range (the movement start range 11 and the movement end range 12) can also be applied in advance to such a vehicle. This means that if such a vehicle has subsequently entered inside the display range of the first display unit 24, display control of vehicle images can be smoothly and accurately executed based on control ranges that have already been applied.

In the above exemplary embodiment, an example has been given of a configuration in which the CPU 51 dynamically changes the width of both the movement start range 11 and the movement end range 12 applied to an inbound vehicle based on the identified inbound vehicle type, however, there is no limitation thereto. For example, a configuration may be employed in which the CPU 51 dynamically changes only the width of one out of the movement start range 11 or the movement end range 12.

In the above exemplary embodiment, an example has been given of a configuration in which an area having a left-right width Xm is set as the movement start range 11 with reference to the width direction central positions of the travel lanes, and an area having a left-right width Ym is set for as the movement end range 12, however, there is no limitation thereto. For example, the CPU 51 may dynamically change the width of at least one out of the movement start range 11 and/or the movement end range 12 set for each of the travel lanes, based on the vehicle lane width of the specific travel lane. Specifically, a configuration may be adopted in which, when the vehicle lane width is a given value or greater, namely is a wider vehicle lane than normal, the width is widened for at least one out of the movement start range 11 and/or the movement end range 12 set for the wide vehicle lane.

In the above exemplary embodiment, a configuration may be adopted in which the CPU 51 changes a display size of an inbound vehicle image based on an entry speed of the inbound vehicle as identified based on the detection information. For example, the CPU 51 may enlarge the display size of the inbound vehicle image in a case in which the entry speed of the inbound vehicle is a given value or greater, and may shrink the display size of the inbound vehicle image when less than the given value.

In the above exemplary embodiment, a configuration may be adopted in which dynamic control is performed to distribute display of the host vehicle image 10A and the surrounding condition image across plural display devices 21 according to the visual environment of a driver. Specifically, a configuration may be adopted in which the CPU 51 identifies at least one out of a gaze direction or head orientation of a driver based on detection information and, based on the identification result, selects a display device 21 (the first display unit 24 or the second display unit 25) having a high visibility for the driver, and outputs the host vehicle image 10A and the surrounding condition image to that display device 21.

In the above exemplary embodiment, a configuration may be adopted in which the CPU 51 displays supplementary information on the first display unit 24 based on a state of the inbound vehicle as identified based on detection information. Specifically, a configuration may be adopted in which the CPU 51 identifies, as an inbound vehicle state, a state such as following, barging in, running alongside, or the like and, according to the state, generates and displays an arrow line or curved line between the host vehicle image 10A and the other-vehicle image 10B to indicate relationships as the supplementary information. Note that a configuration may be adopted in which such arrow lines or curved lines are controlled so as to have a different color, width, flashing pattern, or the like for each identified state, enabling a driver to recognize relationships between vehicles intuitively using such supplementary information.

In the above exemplary embodiments, a configuration may be adopted in which, based on detection information and a map represented by the map data 52B, the CPU 51 displays the other-vehicle image 10B obtained as the inbound vehicle image highlighted when the presence of a merge point has been identified in the surroundings of the host vehicle 10. Specifically, a configuration may be adopted in which the CPU 51 identifies the presence or absence of a specific merge point by reference to the map data 52B, identifies an other-vehicle 100 for which there is a possibility of entering the host vehicle's lane from the identified merge point, and performs highlighted display in advance for a corresponding other-vehicle image 10B.

Although in the above exemplary embodiments an example has been given in which the first display unit 24, which is a meter display, is an example of a "display unit" of the present disclosure, examples of the "display unit" are not limited to meter displays. For example, the examples of the "display unit" may be other displays, such as a center display, a head-up display (HUD), or the like. Moreover, examples of the "display unit" may be a combination of plural displays, such as a meter display and a center display.

In the above exemplary embodiments the display control device 50 executed the specific processing illustrated in Fig. 6 and the display update processing illustrated in Fig. 7. However, there is no limitation thereto, and the specific processing and the display update processing may be executed by cooperation between the display control device 50 and another ECU.

Note that the various processing executed by the CPU 51 reading software (a program) in the above exemplary embodiments may be executed by various processors other than a CPU. Examples of such processors include programmable logic devices (PLD) that allow circuit configuration to be modified post-manufacture, such as a field-programmable gate array (FPGA), and dedicated electric circuits, these being processors including a circuit configuration custom-designed to execute specific processing, such as an application specific integrated circuit (ASIC). Moreover, the various processing may be executed by any one of these various types of processors, or may be executed by a combination of two or more of the same type or different types of processors (such as plural FPGAs, or a combination of a CPU and an FPGA). The hardware structure of these various types of processors is more specifically an electric circuit combining circuit elements such as semiconductor elements.

Moreover, although an embodiment has been explained in the above exemplary embodiment in which the display control program 52A is pre-stored (installed) in the ROM 52, there is no limitation thereto. The display control program 52A may be provided in a format recorded on a recording medium such as a compact disk read only memory (CD-ROM), a digital versatile disk read only memory (DVD-ROM), a universal serial bus (USB) memory, or the like. Moreover, the display control program 52A may in a format downloaded from an external device over a network. Note that the technology of the present disclosure is applicable to programs and program products.

## Claims

1. A display control device (50), comprising a control unit (51B) that is configured to:
display, at a display unit, a vehicle image illustrating at least one vehicle and a road surface image (65) illustrating at least one travel lane in which the vehicle is traveling (24); and
move an inbound vehicle image illustrating an inbound vehicle that has entered a first range (12) set in the travel lane to a pre-set position in the road surface image (65) illustrating the travel lane entered by the inbound vehicle.

2. The display control device (50) of claim 1, wherein the control unit (51B) is configured to, while the inbound vehicle is traveling in the travel lane in which the inbound vehicle was traveling prior to entry, display the inbound vehicle image by fixed display at the pre-set position in the road surface image (65) illustrating the travel lane until the inbound vehicle has exceeded a second range (11) that is wider than the first range (12) and is set in the travel lane.

3. The display control device (50) of claim 2, wherein the control unit (51B) is configured to, after the inbound vehicle has exceeded the second range (11), continuously move the inbound vehicle image in accordance with movement of the inbound vehicle until the inbound vehicle enters the first range (12) set in the travel lane travelled after entry.

4. The display control device (50) of claim 2 or 3, further comprising a setting unit (51C) that is configured to dynamically change a width of at least one of the first range (12) or the second range (11) based on an identified type of the inbound vehicle.

5. The display control device (50) of any one of claims 1 to 4, wherein the pre-set position on the road surface image (65) is a width direction central position of the road surface image (65).

6. The display control device (50) of any one of claims 1 to 5, wherein:
the vehicle includes a host vehicle (10) and an other-vehicle (100); and
the control unit (51B) is configured to, in a case in which the other-vehicle (100) is changing a vehicle lane to be in front, in a progression direction, of the host vehicle (10) and has entered the first range (12) set in the travel lane in which the host vehicle (10) is traveling, move an other-vehicle image (10B) illustrating the other-vehicle (100) to be in front, in the progression direction, of a host vehicle image (10A) illustrating the host vehicle (10) and to the pre-set position on the road surface image (65) illustrating the travel lane.

7. The display control device (50) of any one of claims 1 to 6, wherein:
the vehicle is a host vehicle (10); and
the control unit (51B) is configured to, in a case in which the host vehicle (10) has entered the first range (12) set in the travel lane after having once left the travel lane, move a host vehicle image (10A) illustrating the host vehicle (10) to a pre-set position on the road surface image (65) illustrating the travel lane.

8. The display control device (50) of any one of claims 1 to 7, wherein the display unit (24) is a meter display provided at a vehicle front side of a driver's seat of the vehicle.

9. A display control method executable by a computer to perform processing, the processing comprising:
displaying, at a display unit (24), a vehicle image illustrating at least one vehicle and a road surface image (65) illustrating at least one travel lane in which the vehicle is traveling; and
moving an inbound vehicle image illustrating an inbound vehicle that has entered a first range (12) set in the travel lane to a pre-set position in the road surface image (65) illustrating the travel lane entered by the inbound vehicle.

10. A non-transitory recording medium storing a display control program (52A) executable by a computer to perform processing, the processing comprising:
displaying, at a display unit (24), a vehicle image illustrating at least one vehicle and a road surface image (65) illustrating at least one travel lane in which the vehicle is traveling; and
moving an inbound vehicle image illustrating an inbound vehicle that has entered a first range (12) set in the travel lane to a pre-set position in the road surface image (65) illustrating the travel lane entered by the inbound vehicle.
